(19) **Europäisches Patentamt** / **European Patent Office** / **Office européen des brevets**

(11) **EP 4 598 097 A1**

(12) **EUROPEAN PATENT APPLICATION**
published in accordance with Art. 153(4) EPC

(43) Date of publication:
06.08.2025 Bulletin 2025/32

(21) Application number: 23870822.6

(22) Date of filing: 26.09.2023

(51) International Patent Classification (IPC):
*H04W 24/02* (2009.01)

(52) Cooperative Patent Classification (CPC):
**H04W 24/02; H04W 56/00; H04W 74/0833**

(86) International application number:
**PCT/CN2023/121586**

(87) International publication number:
**WO 2024/067594 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.09.2022 CN 202211215291

(71) Applicant: **Beijing Unisoc Communications Technology Co., Ltd**
**Beijing 100083 (CN)**

(72) Inventors:
• **WANG, Hualei**
**Beijing 100083 (CN)**
• **LEI, Zhenzhu**
**Beijing 100083 (CN)**

(74) Representative: **Mewburn Ellis LLP**
**Aurora Building**
**Counterslip**
**Bristol BS1 6BX (GB)**

(54) **RESOURCE CONFIGURATION METHODS AND RELATED APPARATUSES**

(57) A resource configuration method and a related apparatus are provided in embodiments of the disclosure. The method includes the following. Configuration information is obtained, where the configuration information indicates random access resources for at least one of multiple transmission and reception points (TRPs). Random access is performed according to the configuration information. As such, each TRP can correspond to random access resources, so that a timing advance (TA) per TRP can be effectively supported, and the random access efficiency and quality of the terminal device can be improved.

NETWORK DEVICE    TERMINAL DEVICE

AT 201, SEND, BY NETWORK DEVICE, CONFIGURATION INFORMATION TO TERMINAL DEVICE, WHERE CONFIGURATION INFORMATION INDICATES RANDOM ACCESS RESOURCES FOR AT LEAST ONE OF MULTIPLE TRPS

AT 202, PERFORM, BY TERMINAL DEVICE, RANDOM ACCESS ACCORDING TO CONFIGURATION INFORMATION

FIG. 2a

## Description

TECHNICAL FIELD

This disclosure relates to the field of communication technology, and in particular, to a resource configuration method and a related apparatus.

BACKGROUND

In a network architecture of a new generation radio network system (for example, a 5th-generation (5G) system), multiple transmission and reception points (TRPs) can simultaneously serve a terminal device for data transmission. Since there is currently no physical random access channel (PRACH) resource configuration scheme for multiple TRPs, a timing advance (TA) per TRP cannot be effectively supported.

SUMMARY

A resource configuration method and a related apparatus are provided in embodiments of the disclosure, so as to configure random access-related resources for at least one of multiple transmission and reception points (TRPs). Therefore, a timing advance (TA) per TRP can be effectively supported, and the random access efficiency and quality of a terminal device can be improved.

In a first aspect, a resource configuration method is provided in embodiments of the disclosure. The method includes the following. Configuration information is obtained, where the configuration information indicates random access resources for at least one of multiple TRPs. Random access is performed according to the configuration information.

In a second aspect, a resource configuration method is provided in embodiments of the disclosure. The method includes the following. Configuration information is sent, where the configuration information indicates random access resources for at least one of multiple TRPs.

In a third aspect, a resource configuration apparatus is provided in embodiments of the disclosure. The apparatus includes an obtaining unit and a random access unit. The obtaining unit is configured to obtain configuration information, where the configuration information indicates random access resources for at least one of multiple TRPs. The random access unit is configured to perform random access according to the configuration information.

In a fourth aspect, a resource configuration apparatus is provided in embodiments of the disclosure. The apparatus includes a sending unit. The sending unit is configured to send configuration information, where the configuration information indicates random access resources for at least one of multiple TRPs.

In a fifth aspect, a terminal device is provided in embodiments of the disclosure. The terminal device includes a processor, a memory, a communication interface, and one or more programs. The one or more programs are stored in the memory and configured to be executed by the processor, where the programs contain instructions for executing operations in any one of the methods described in the first aspect of embodiments of the disclosure.

In a sixth aspect, a network device is provided in embodiments of the disclosure. The network device includes a processor, a memory, a communication interface, and one or more programs. The one or more programs are stored in the memory and configured to be executed by the processor, where the programs contain instructions for executing operations in any one of the methods described in the second aspect of embodiments of the disclosure.

In a seventh aspect, a chip is provided in embodiments of the disclosure. The chip includes a processor. The processor is configured to invoke and execute a computer program stored in a memory, to cause a device equipped with the chip to execute part or all of operations in any one of the methods described in the first aspect or the second aspect of embodiments of the disclosure.

In an eighth aspect, a chip module is provided in embodiments of the disclosure. The chip module includes the chip described in the seventh aspect of embodiments of the disclosure.

In a ninth aspect, a computer-readable storage medium is provided in embodiments of the disclosure. The computer-readable storage medium is configured to store a computer program for electronic data interchange (EDI), where the computer program causes a computer to execute part or all of operations in any one of the methods described in the first aspect or the second aspect of embodiments of the disclosure.

In a tenth aspect, a computer program is provided in embodiments of the disclosure. The computer program causes a computer to execute part or all of operations in any one of the methods described in the first aspect or the second aspect of embodiments of the disclosure. The computer program may be a software installation package.

As can be seen, in embodiments of the disclosure, configuration information for random access of the terminal device includes random access resources configured for at least one of multiple TRPs, so that each TRP can correspond to random access resources. Therefore, a TA per TRP can be effectively supported, and the random access efficiency and quality of the terminal device can be improved.

BRIEF DESCRIPTION OF THE DRAWINGS

To describe technical solutions in embodiments of the disclosure or related art more clearly, the following will give a brief introduction to the accompanying drawings used for describing the embodiments or related art.

Apparently, the accompanying drawings described below are merely some embodiments of the disclosure. Based on these drawings, those of ordinary skill in the art can also obtain other drawings without creative effort.

FIG. 1a is an architecture diagram of a network system provided in embodiments of the disclosure.

FIG. 1b is a schematic structural diagram of a terminal device provided in embodiments of the disclosure.

FIG. 1c is a schematic structural diagram of a network device provided in embodiments of the disclosure.

FIG. 2a is a schematic flowchart of a resource configuration method provided in embodiments of the disclosure.

FIG. 2b is a schematic diagram of a preamble configuration provided in embodiments of the disclosure.

FIG. 2c is a schematic diagram of a preamble configuration provided in other embodiments of the disclosure.

FIG. 2d is a schematic diagram of a preamble configuration provided in other embodiments of the disclosure.

FIG. 3 is a block diagram of functional units of a resource configuration apparatus provided in embodiments of the disclosure.

FIG. 4 is a block diagram of functional units of a resource configuration apparatus provided in other embodiments of the disclosure.

FIG. 5 is a block diagram of functional units of a resource configuration apparatus provided in other embodiments of the disclosure.

FIG. 6 is a block diagram of functional units of a resource configuration apparatus provided in other embodiments of the disclosure.

DETAILED DESCRIPTION

To enable those skilled in the art to better understand solutions of the disclosure, the following will describe technical solutions of embodiments of the disclosure clearly and completely with reference to the accompanying drawings of embodiments of the disclosure. Apparently, the embodiments described herein are some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", and the like in the specification and claims of the disclosure and in the above accompanying drawings are used to distinguish different objects, and are not used to describe a particular sequence. In addition, the terms "include", "comprise", and "have" as well as variations thereof are intended to cover non-exclusive inclusion. For example, a process, method, system, product, or device including a series of steps or units is not limited to the listed steps or units, and optionally, may include steps or units that are not listed or include other steps or units inherent to the process, method, product, or device.

The "embodiment" or "implementation" mentioned herein means that a particular feature, structure, or characteristic described in connection with the embodiment or implementation may be included in at least one embodiment of the disclosure. The phrase appearing in various places in the specification does not necessarily refer to the same embodiment, nor does it refer to independent or alternative embodiments that are mutually exclusive to other embodiments. It will be explicitly and implicitly understood by those skilled in the art that the embodiments described herein may be combined with other embodiments. In embodiments of the disclosure, the terms "system" and "network" are usually used interchangeably, but the meaning thereof can be understood by those skilled in the art.

First, some of the terms involved in embodiments of the disclosure are explained to facilitate the understanding of those skilled in the art.

Random access: a random access procedure refers to a process before a terminal device sends a random access preamble, tries to access a network, and establishes a basic signaling connection with a network device. A type of random access may be classified into two-step random access and four-step random access.

For the four-step random access, the whole procedure includes four steps, namely transmission of a random access request message, transmission of a random access response (RAR) message, transmission of message 3 (Msg3), and transmission of message 4 (Msg4).

Step I, transmission of the random access request message means that the terminal device sends the random access request message to the network device. The random access request message may also be referred to as message 1 (Msg1).

Specifically, the random access request message may include a random access preamble (RA preamble). The RA preamble can be mainly used to request an access to the network device, so that the network device can estimate a transmission delay between the network device and the terminal device based on the RA preamble, align uplink timing accordingly, and indicate to the terminal device via the RAR message.

Step II, transmission of the RAR message means that the network device sends the RAR message to the terminal device upon reception of the random access request message. The RAR message may also be referred to as message 2 (Msg2).

Step III, transmission of message 3 means that the terminal device sends Msg3 to the network device upon reception of the RAR message.

Step IV, transmission of message 4 means that the network device sends message 4 to the terminal device upon reception of Msg3. Message 4 may also be referred to as Msg4.

In a contention resolution mechanism, the network device carries in Msg4 an identity (ID) for uniquely identifying the terminal device to indicate a terminal device that succeeds, while other terminal devices that fail in contention resolution will re-initiate random access.

Compared with the four-step random access procedure, the two-step random access procedure contributes to reducing an access delay of the terminal device. The two-step random access procedure may include the following two steps.

Step 1, transmission of message A (i.e., MsgA)

It may be noted that, the terminal device sends MsgA to the network device. MsgA may include a random access request message. The random access request message herein may be Msg1 described above in the four-step random access procedure.

In addition, MsgA may include two parts, namely a random access preamble and a physical uplink shared channel (PUSCH) payload.

Step 2, transmission of message B (i.e., MsgB).

It may be noted that, the network device receives MsgA and sends MsgB to the terminal device. MsgB may include an RAR.

Random access channel (RACH) occasion or physical random access channel (PRACH) occasion (RO): in downlink communication of a wireless communication system, the system periodically transmits a synchronization signal and a broadcast channel to the terminal device through a synchronization signal and physical broadcast channel (PBCH) block (SSB). In addition, a base station configures a PRACH configuration period. In the PRACH configuration period, a certain number (quantity) of RACH transmission occasions, i.e., ROs, are configured.

An association relationship between an SSB and an RO may be indicated by a higher-layer parameter *ssb-per-rach-occasion (N)* or *ssb-perRACH-OccasionAndCB-PreamblesPerSSB* or *msgA-SSB-PerRACH-OccasionAndCB-PreamblesPerSSB,* where a value of N may be {1/8, 1/4, 1/2, 1, 2, 4, 8, 16}. If N < 1, it indicates that 1 SSB can be mapped to multiple ROs. If N = 1, it indicates that 1 SSB is mapped to 1 RO. If N > 1, it indicates that multiple SSBs can be mapped to 1 RO. The number of ROs that can be configured in the frequency domain, i.e., the number of ROs in the frequency domain on a time-domain resource, may be {1, 2, 4, 8}, which is configured by a higher-layer parameter *msg1-FDM.* An SSB-RO mapping cycle refers to an RO period required for mapping SSB indexes in at least one complete round. Starting from frame 0, a mapping cycle may be one PRACH period or multiple PRACH periods, which depends on configurations of RO time-domain resources and frequency-domain resources.

For type-1 random access or type-2 random access (where an RO configuration of the type-2 random access is separate from an RO configuration of the type-1 random access), among preambles available for (or associated with) each RO, if N SSBs are mapped to one RO (N > 1), then the number of available preambles can be divided into N parts, and an index of the first contention-based preamble for each SSB is $n \cdot N_{preamble}^{total}/N$ (where n refers to an SSB index). $N_{preamble}^{total}$ may be indicated by a higher-layer parameter *totalNumberOfRA-Preambles* or *msgA-TotalNumberOfRA-Preambles.*

In case where the type-2 random access and the type-1 random access use a common RO configuration, if one SSB is mapped to multiple ROs (N < 1), then among preambles available for (or associated with) each RO and preambles available for (or associated with) each SSB, P preambles that can be used for the type-2 random access start from index Q. If N SSBs are mapped to one RO (N > = 1), then among preambles available for (or associated with) each RO and preambles available for (or associated with) each SSB, P preambles that can be used for the type-2 random access start from index $n \cdot N_{preamble}^{total}/N + Q$. Herein, $N_{preamble}^{total}$ may be indicated by a higher-layer parameter *totalNumberOfRA-Preambles* or *msgA-TotalNumberOfRA-Preambles.* Q indicates the number of preambles associated with each SSB associated with each RO that are used for the type-1 random access, and P indicates the number of preambles associated with each SSB associated with each RO that are used for the type-2 random access.

The following will describe technical solutions of a resource configuration method and a related apparatus in embodiments of the disclosure with reference to the accompanying drawings.

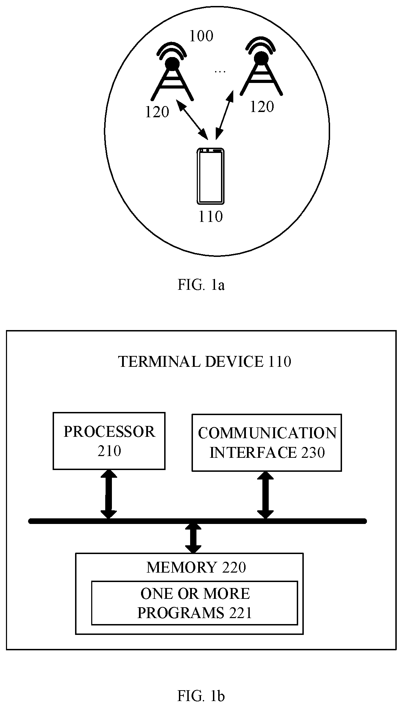

Reference can be made to FIG. 1a, where FIG. 1a is an architecture diagram of a network system provided in embodiments of the disclosure. As illustrated in the figure, the network system includes multiple network devices 120 and multiple terminal devices 110. The network device 120 can be regarded as any one of transmission and reception points (TRPs) in this solution. The network device 120 sends configuration information to the terminal device 110, and then the terminal device 110 performs random access according to the configuration information.

The terminal device 110 in embodiments of the disclosure is a device with wireless transceiver functions, which may be an electronic device or may be a server. The terminal device may be referred to as a user equipment (UE), a mobile station (MS), a mobile terminal (MT), an access terminal device, an in-vehicle terminal device, an industrial control terminal device, a UE unit, a UE station, a mobile station, a remote station, a remote terminal device, a mobile device, a UE terminal device, a wireless communication device, a UE agent, or a user apparatus, etc. The UE may be stationary or mobile. It may be noted that the terminal device may support at least one wireless communication technology, for example, long time evolution (LTE), new radio (NR), wideband code division multiple access (WCDMA), and the like. For example, the electronic device may be a mobile phone, a pad, a desktop computer, a notebook computer, an all-in-one computer, an in-vehicle terminal device, a virtual reality (VR) terminal device, an augmented reality (AR) terminal device, a wireless terminal device in industrial control, a wireless terminal device in self driving, a wireless terminal device in remote medical surgery, a wireless terminal device in smart grid, a wireless terminal device in transport safety, a wireless terminal device in smart city, a wireless terminal device in smart home, a cellular phone, a cordless phone, a session initiation protocol (SIP) phone, a wireless local loop (WLL) station, a personal digital assistant (PDA), various devices having wireless communication functions such as a handheld device, a computing device or other processing devices coupled with a wireless modem, a wearable device, a terminal device in a future mobile communication network, or a terminal device in a future evolved public land mobile network (PLMN), etc. In some embodiments of the disclosure, the terminal device may also be an apparatus with wireless transceiver functions, such as a system-on-chip (SOC). The SOC may include a chip, and may also include other discrete components.

The network device in embodiments of the disclosure is a device that provides wireless communication functions for the UE, which may also be referred to as an access-network device, an access-network network element, a radio access network (RAN) device, and the like. The network device may support at least one wireless communication technology, such as LTE, NR, WCDMA, and the like. Exemplarily, the access-network device includes, but is not limited to: a next-generation base station (gNB), an evolved node B (eNB), a radio network controller (RNC), a node B (NB), a base station controller (BSC), a base transceiver station (BTS), a home base station (for example, home evolved node B, or home node B, HNB), a base band unit (BBU), a TRP, a transmitting point (TP), a mobile switching center in the 5th-generation (5G) system, and so on. The network device may also be a wireless controller, a centralized unit (CU), and/or a distributed unit (DU) in a cloud radio access network (CRAN) scenario, or the network device may be a relay station, an access point, an in-vehicle device, a terminal device, a wearable device, and an access-network device in future mobile communication or in a future evolved PLMN. In some embodiments, the network device may also be an apparatus for providing wireless communication functions for the UE, such as an SOC. Exemplarily, the SOC may include a chip, and may also include other discrete components.

In some possible embodiments, the network device may be any one of multiple stations that perform coherent joint transmission (CJT) with the terminal device, another station other than the multiple stations, or another network device that performs network communication with the terminal device, which is not limited herein. Multi-station coherent joint transmission may be joint coherent transmission of multiple stations, transmission of different data belonging to the same physical downlink shared channel (PDSCH) from different stations to the terminal device, or transmission by multiple stations virtualized into one station. Names with the same meaning specified in other standards are also applicable to the disclosure. That is, the names of these parameters are not limited in the disclosure. The station in multi-station coherent joint transmission may be a remote radio head (RRH), a TRP, etc., which is not limited herein.

In some possible embodiments, the network device may be any one of multiple stations that perform incoherent joint transmission with the terminal device, another station other than the multiple stations, or another network device that performs network communication with the terminal device, which is not limited herein. Multi-station incoherent joint transmission may be joint incoherent transmission of multiple stations, or transmission of different data belonging to the same PDSCH from different stations to the terminal device. Names with the same meaning specified in other standards are also applicable to the disclosure. That is, the names of these parameters are not limited in the disclosure. The station in multi-station incoherent joint transmission may be a RRH, a TRP, etc., which is not limited herein.

It may be noted that, the TRP in this disclosure is not limited to the coherent joint transmission or incoherent joint transmission scenario, and may also be applicable to other scenarios, which is not limited herein.

FIG. 1b is a schematic structural diagram of a terminal device 110. As illustrated in FIG. 1b, the terminal device 110 includes a processor 210, a memory 220, a communication interface 230, and one or more programs 221. The one or more programs 221 are stored in the memory 220 and configured to be executed by the processor 210, where the programs 221 contain instructions for executing operations executed by a device at a terminal-device side in the method described in the method embodiments of the disclosure.

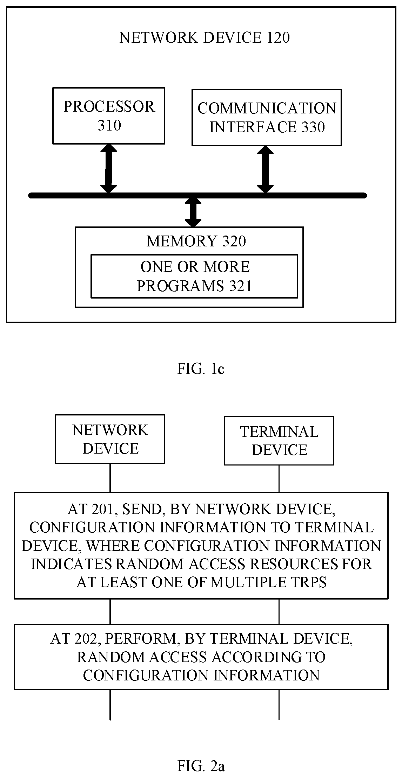

FIG. 1c is a schematic structural diagram of a network device 120. As illustrated in FIG. 1c, the network device 120 includes a processor 310, a memory 320, a communication interface 330, and one or more programs 321. The one or more programs 321 are stored in the memory 320 and configured to be executed by the processor 310, where the programs 321 contain instructions for executing operations executed by a device at a network side in the method described in the method embodiments of the disclosure.

Reference can be made to FIG. 2a, where FIG. 2a is a schematic flowchart of a resource configuration method provided in embodiments of the disclosure. As illustrated in the figure, the resource configuration method includes the following.

At 201, a network device sends configuration information to a terminal device.

Accordingly, the terminal device obtains the configuration information from the network device.

The configuration information indicates random access resources for at least one of multiple TRPs.

The configuration information may be random access resources configured for each of the multiple TRPs or random access resources configured for only part of the multiple TRPs, and random access resources for other TRPs of the multiple TRPs can be obtained through inference. In embodiments of the disclosure, the network device can configure the multiple TRPs for the terminal device.

It may be noted that, the TRP may be represented by a transmission configuration indicator (TCI) state, a sounding reference signal (SRS) resource, an SRS resource set, spatial information, or the like. In other words, the TCI state, the SRS resource, the SRS resource set, the spatial information, or the like can also be regarded as a concept of the TRP.

In addition, the TRP in this disclosure may be associated with the spatial information or a beam direction (for example, a beam or a group of beams). Alternatively, the TRP may be represented by the spatial information or the beam direction (for example, a beam or a group of beams). Alternatively, the TRP may be represented by a power control parameter. In addition, the TRP in this disclosure may be a functional module (for example, implemented by software functions) or may be implemented by hardware. The implementation of the TRP is not limited in this disclosure.

In an NR system, the random access resource may include a common random access configuration (RACH-ConfigCommon) information element and/or RACH-ConfigCommon TwoStepRA and/or RACH-ConfigDedicated and/or RACH-ConfigGeneric and/or RACH-ConfigGenericTwoStepRA. The configured random access resources include time-domain resources and/or frequency-domain resources and/or random access preambles for random access, and/or are used to configure a mapping relationship between an SSB and a random access resource. According to the mapping relationship between the SSB and the random access resource or according to an SSB satisfying a condition in a measurement result, the terminal device can determine a random resource subset corresponding to the SSB.

At 202, the terminal device performs random access according to the configuration information.

During the random access, the terminal device sends random access request information to a network according to the configured random access resources, and then the network sends response information to the terminal device after receiving the random access request information. The random access resources for the least one TRP may include two-step random access resources and/or four-step random access resources configured for the terminal device. A random access procedure can be classified into a contention-based random access procedure and a contention-free random access procedure. The contention-based random access means that an access resource is randomly obtained by the terminal device itself, and the contention-free random access means that an access resource for the terminal device is allocated by a base station. An essential difference between the contention-based random access and the contention-free random access lies in whether the terminal device, before initiating random access, receives a dedicated random access resource allocated from the network.

As can be seen, in this embodiment, random access resources configured by the network device for the terminal device include random access resources configured for the at least one of the multiple TRPs, so that each TRP can correspond to random access resources. Therefore, a timing advance (TA) per TRP can be effectively supported, and the random access efficiency and quality of the terminal device can be improved.

In a possible embodiment, each of the multiple TRPs corresponds to one set of random access resources.

The configuration information may include a configuration of one set of random access resources for each TRP. That is, one set of random access common configuration information (RACH-ConfigCommon) and/or two-step random access common configuration information (RACH-ConfigCommonTwoStepRA) and/or RACH-ConfigDedicated and/or RACH-ConfigGeneric and/or RACH-ConfigGenericTwoStepRA is associated with one TRP, and another set of RACH-ConfigCommon and/or RACH-ConfigCommonTwoStepRA and/or RACH-ConfigDedicated and/or RACH-ConfigGeneric and/or RACH-ConfigGenericTwoStepRA is associated with another TRP.

As can be seen, in this embodiment, one set of random access resources can be configured for each TRP in the configuration information, so that each TRP can correspond to random access resources. Therefore, a TA per TRP can be effectively supported, and the random access efficiency and quality of the terminal device can be improved.

In a possible embodiment, the multiple TRPs include a first TRP and a second TRP, and the configuration information includes first random access resources for the first TRP and/or second random access resources for the second TRP.

When random access resources are configured for only one of the first TRP and the second TRP, random access resources for the other TRP can be obtained through inference.

In a possible embodiment, the first random access resources are resources corresponding to a first physical cell identifier (PCI), the second random access resources are resources corresponding to a second PCI, the first PCI is a PCI of a serving cell, and the second PCI is a PCI of any one of one or more non-serving cells.

In an inter-cell multi-TRP (inter-cell M-TRP) scenario, random access resources can be respectively configured for each second serving cell, i.e., a non-serving cell. A PCI associated with an SSB of the serving cell is different from a PCI associated with an SSB of the non-serving cell, and an association relationship between the SSB of the non-serving cell and the PCI can be configured through an SSB-MTC-additional PCI. It may be noted that, the PCI can be used to distinguish different cells or signals of different cells, that is, the PCI can be associated with a cell. Therefore, in this disclosure, a parameter can be associated with the PCI, so that the parameter is associated with the cell, i.e., different cells or signals of different cells are distinguished based on parameters. When random access resources are configured for two TRPs, random access resources for one TRP are resources corresponding to the PCI of the serving cell, and random access resources for the other TRP are resources corresponding to the PCI of any one of the non-serving cells.

As can be seen, in this embodiment, random access resources for two TRPs are resources corresponding to the PCI of the serving cell and resources corresponding to the PCI of the non-serving cell, respectively. Therefore, a TA per TRP can be effectively supported, and the random access efficiency and quality of the terminal device can be improved.

In a possible embodiment, when the second PCI is a PCI of a non-serving cell associated with an active TCI state for a PDSCH, the second random access resources are available.

The second random access resources being available means that the terminal device can perform random access according to the random access resources configured for the second TRP. When the terminal device performs beam-based data transmission with the network device, a TCI of a transmitting serving cell is usually configured for the terminal device, i.e., beam configuration of the serving cell is performed for the terminal device.

In a possible embodiment, the multiple TRPs correspond to a set of random access resources.

The multiple TRPs corresponding to the set of random access resources may mean that some of the multiple TRPs correspond to the same set of random access resources, and other TRPs correspond to another set of random access resources. Alternatively, each of the multiple TRPs may correspond to the same set of random access resources.

In a possible embodiment, the set of random access resources corresponding to the multiple TRPs includes preamble information associated with the at least one of the multiple TRPs in one RO.

When the same set of random access resources is configured for each of the multiple TRPs, different TRPs are associated with different preambles in the same RO. A preamble is actual content sent by the terminal device on a PRACH, and includes a cyclic prefix (CP) with a length of $Tcp$ and a sequence with a length of $Tseq$. The preamble information included in the set of random access resources includes indexes of preambles and/or the number of preambles associated with each TRP in the same RO.

As can be seen, in this embodiment, when the multiple TRPs share the same random access resource configuration, the random resource configuration for each TRP is realized by associating different TRPs with different preambles in the same RO. Therefore, a TA per TRP can be effectively supported, and the random access efficiency and quality of the terminal device can be improved.

In a possible embodiment, the set of random access resources corresponding to the multiple TRPs includes a configuration of type-1 random access for a terminal device. The number of preambles associated with each SSB associated with each RO related to the type-1 random access is $X1$, and $X1$ is an integer.

The number of preambles available for (or associated with) each SSB may be indicated by a higher-layer parameter CB-PreamblesPerSSB or ssb-per-RACH-OccasionAndCB-PreamblesPerSSB or msgA-SSB-PerRACH-OccasionAndCB-PreamblesPerSSB or msgA-CB-PreamblesPerSSB-PerSharedRO, and the number of SSBs to which each RO is mapped may also be known according to a mapping relationship between the RO and the SSB. $X1$ may be indicated by the preamble information included in the set of random access resources corresponding to the first TPR and the second TRP. That is, among preambles available for one RO related to the type-1 random access, $X1$ preambles are available for one SSB to which the one RO is mapped. A random access type of the type-1 random access may be the above four-step random access. For a type-1 mapping relationship (i.e., the above case where $N<1$ in the mapping relationship between the SSB and the RO), since one SSB corresponds to multiple ROs, the number $X1$ can be understood as the number of preambles associated with one RO that are used for contention access or the number of preambles associated with one RO that are used for contention-free access. For a type-2 mapping relationship (i.e., the above case where $N=1$ or $N>1$ in the mapping relationship between the SSB and the RO), since one RO is associated with multiple SSBs, if the number of preambles associated with each SSB is $X1$, then when the one RO is associated with $N$ SSBs, the number of preambles associated with the one RO that are used for contention access or the number of preambles associated with the one RO that are used for contention-free access is $N*X1$.

In a possible embodiment, the at least one TRP includes a first TRP and a second TRP. Among the $X1$ preambles associated with each SSB, first $X1$-$L1$ preambles are associated with the first TRP, and last $L1$ preambles are associated with the second TRP. $L1$ is an integer.

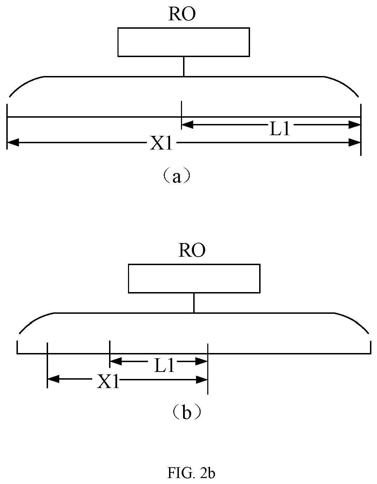

Each SSB described in this solution refers to each SSB associated with each RO. $X1$ and/or $L1$ and/or $X1$-$L1$ may be indicated by the preamble information included in the set of random access resources corresponding to the first TPR and the second TRP. That is, among preambles available for one RO related to the type-1 random access, $X1$ preambles are available for one SSB to which the one RO is mapped, and among the $X1$ preambles, $L1$ preambles are related to the first TRP, and $X1$-$L1$ preambles are related to the second TRP. As illustrated in FIG. 2b, the number of preambles associated with each TRP associated with one SSB when the mapping relationship between the SSB and the RO is the type-1 mapping relationship is illustrated in (a) in FIG. 2b. In this case, among the $X1$ preambles, the first $X1$-$L1$ preambles are associated with the first TRP, and the last $L1$ preambles are associated with the second TRP. The number of preambles associated with each TRP associated with one SSB when the mapping relationship between the SSB and the RO is the type-2 mapping relationship is illustrated in (b) in FIG. 2b. $X1$ preambles associated with one SSB are only part of all preambles associated with that RO, in which the first $X1$-$L1$ preambles are associated with the first TRP, and the last $L1$ preambles are associated with the second TRP. In particular, $X1$ preambles associated with the n-th SSB start from a preamble with an index of $(n$-$1)*X1$. For example, $X1$ preambles for the first SSB start from a preamble with an index of 0. For example, $X1$ preambles for the second SSB start from a preamble with an index of $X1$.

In a possible embodiment, the at least one TRP includes a first TRP and a second TRP. Among the $X1$ preambles associated with each SSB, the number of preambles associated with the first TRP is $K$, and the number of preambles associated with the second TRP is inferred from the number of preambles associated with the first TRP, where $K$ is an integer. $K$ may be indicated by the preamble information included in the set of random access resources corresponding to the first TPR and the second TRP. That is, among preambles available for one RO related to the type-1 random access, $X1$ preambles are available for one SSB to which the one RO is mapped, and among the $X1$ preambles, $K$ preambles are related to the first TRP.

In a possible embodiment, the at least one TRP includes a first TRP and a second TRP. Among the $X1$ preambles associated with each SSB, the first TRP is associated with $X$ preambles, and the second TRP is associated with $Y$ preambles, where $X$ and/or $Y$ are network configuration information or protocol pre-defined information, and $X$ and $Y$ are an integer. The number of preambles corresponding to the first TRP and/or the second TRP can be directly or indirectly obtained in a protocol pre-defined manner.

In a possible embodiment, the at least one TRP includes a first TRP and a second TRP. Among the $X1$ preambles associated with each SSB, a scaling factor for the first TRP is $\alpha$, and a scaling factor for the second TRP is $(1$-$\alpha)$, where the scaling factor indicates the number of preambles associated with the first TRP and/or the number of preambles associated with the second TRP. That is to say, in this case, the number of preambles associated with the first TRP is $X1*\alpha$, and the number of preambles associated with the second TRP is $X1*(1$-$\alpha)$. The network can configure a scaling factor(s) for the first TRP and/or the second TRP. If the network configures the scaling factor for only the first TRP, the number of preambles associated with the second TRP is obtained through derivation in this case. In particular, when a value of $X1*\alpha$ is not an integer, rounding calculation needs to be performed on the value, where the rounding manner may be rounding up or rounding down or taking an integer part of the value, etc. Certainly, the network can configure the scaling factor(s) for the first TRP and/or the second TRP.

As can be seen, in this embodiment, the random resource configuration for each TRP is realized by associating different TRPs with different preambles in the same RO. Therefore, a TA per TRP can be effectively supported, and the random access efficiency and quality of the terminal device can be improved.

In a possible embodiment, the set of random access resources corresponding to the multiple TRPs further includes a configuration of type-2 random access for the terminal device. Each of the type-1 random access and the type-2 random access corresponds to one set of PRACH configurations. Preamble information associated with the at least one TRP in one RO is associated with the type-1 random access and/or the type-2 random access.

A random access type of the type-2 random access may be the above two-step random access. When both the type-1 random access and the type-2 random access are configured, but the type-1 random access procedure and the type-2 random access procedure use separate PRACH configurations, the number of preambles associated with each SSB associated with each RO related to the type-2 random access is $X2$, and $X2$ is an integer. The at least one TRP includes a first TRP and a second TRP. Among the $X2$ preambles associated with each SSB, first $X2$-$L4$ preambles are associated with the first TRP, and last $L4$ preambles are associated with the second TRP, where $L4$ is an integer. $X2$ and/or $L4$ and/or $X2$-$L4$ may be indicated by the preamble information included in the set of random access resources corresponding to the first TPR and the second TRP. That is, among preambles available for one RO related to the type-2 random access, $X2$ preambles are available for one SSB to which the one RO is mapped, and among the $X2$ preambles, $L4$ preambles are related to the first TRP, and $X2$-$L4$ preambles are related to the second TRP. It may be understood that for an SSB in an RO associated with the type-1 random access and an SSB in an RO associated with the type-2 random access, preambles associated with the two SSBs have the same configuration manner, and preambles for TRPs associated with the two SSBs also have the same configuration manner. It may be noted that, although the same configuration manner is used, the number of configured preambles may be different.

As can be seen, in this embodiment, the random resource configuration for each TRP is realized by associating different TRPs with different preambles in the same RO. Therefore, a TA per TRP can be effectively supported, and the random access efficiency and quality of the terminal device can be improved.

In a possible embodiment, the set of random access resources corresponding to the multiple TRPs includes configurations of type-1 random access and type-2 random access for a terminal device. The type-1 random access and the type-2 random access share the same set of PRACH configurations. The number of preambles associated with each SSB associated with each RO related to the type-1 random access is $Q$, the number of preambles associated with each SSB associated with each RO related to the type-2 random access is $P$, and $Q$ and $P$ each are an integer.

A random access type of the type-1 random access may be the above four-step random access, and the type-2 random access may be the above two-step random access. For a type-1 mapping relationship (i.e., the above case where $N<1$ in the mapping relationship between the SSB and the RO), since one SSB corresponds to multiple ROs, the number $Q$ can be understood as the number of preambles associated with one RO that are used for contention access of the four-step random access procedure or the number of preambles associated with one RO that are used for contention-free access of the four-step random access procedure. The number $P$ can be understood as the number of preambles associated with one RO that are used for contention access of the two-step random access procedure or the number of preambles associated with one RO that are used for contention-free access of the two-step random access procedure. $Q$ and/or $P$ may be indicated by the preamble information included in the set of random access resources corresponding to the first TPR and the second TRP.

For a type-2 mapping relationship (i.e., the above case where $N=1$ or $N>1$ in the mapping relationship between the SSB and the RO), one RO is associated with multiple SSBs. Therefore, if the number of preambles associated with each SSB that are related to the type-1 random access is $Q$, and the number of preambles associated with each SSB that are related to the type-2 random access is $P$, then when the one RO is associated with $N$ SSBs, the number of preambles associated with the one RO that are used for contention access of the type-1 random access procedure or the number of preambles associated with the one RO that are used for contention-free access of the type-1 random access procedure is $N*Q$. Similarly, the number of preambles associated with the one RO that are used for contention access of the type-2 random access procedure or the number of preambles associated with the one RO that are used for contention-free access of the type-2 random access procedure is $N*P$.

In a possible embodiment, the at least one TRP includes a first TRP and a second TRP. Among the $Q$ preambles, first $Q$-$L2$ preambles are associated with the first TRP, and last $L2$ preambles are associated with the second TRP. $L2$ is an integer.

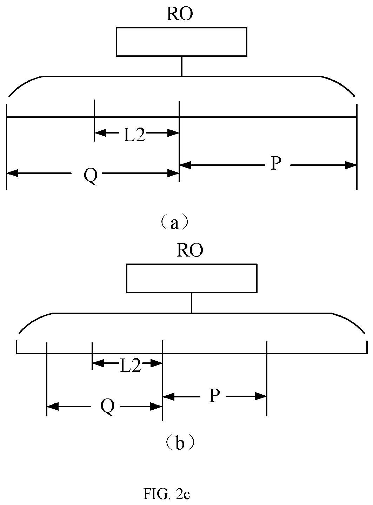

$Q$ and/or $L2$ and/or $Q$-$L2$ may be indicated by the preamble information included in the set of random access resources corresponding to the first TPR and the second TRP. That is, among preambles available for one RO related to the type-1 random access, $Q$ preambles are available for one SSB to which the one RO is mapped, and among the $Q$ preambles, $L2$ preambles are related to the first TRP, and $Q$-$L2$ preambles are related to the second TRP. As illustrated in FIG. 2c, the number of preambles associated with each TRP among $Q$ preambles for one SSB associated with one RO that are related to the type-1 random access when the mapping relationship between the SSB and the RO is the type-1 mapping relationship is illustrated in (a) in FIG. 2c. In this case, among the $Q$ preambles, the first $Q$-$L2$ preambles are associated with the first TRP, and the last $L2$ preambles are associated with the second TRP.

The number of preambles associated with each TRP among $Q$ preambles for any one of multiple SSBs associated with one RO that are related to the type-1 random access when the mapping relationship between the SSB and the RO is the type-2 mapping relationship is illustrated in (b) in FIG. 2c. $Q$ preambles associated with one SSB are only part of all preambles associated with that RO, in which the first $Q$-$L2$ preambles are associated with the first TRP, and the last $L2$ preambles are associated with the second TRP. In particular, $Q$ preambles associated with the n-th SSB in $N$ SSBs start from a preamble with an index of $(n-1) \cdot N_{preamble}^{total}/N$. For example, $Q$ preambles for the first SSB start from a preamble with an index of 0. For example, $Q$ preambles for the second SSB start from a preamble with an index of $N_{preamble}^{total}/N$. It may be noted that, if a value of $(n-1) \cdot N_{preamble}^{total}/N$ is not an integer, rounding calculation needs to be performed on the value of $(n-1) \cdot N_{preamble}^{total}/N$, where the rounding manner may be rounding up or rounding down or taking an integer part of the value, etc. $N_{preamble}^{total}$ may be indicated by a higher-layer parameter *totalNumberOfRA-Preambles* or *msgA-TotalNumberOfRA-Preambles.*

In a possible embodiment, the at least one TRP includes a first TRP and a second TRP. Among the *Q* preambles, the number of preambles associated with the first TRP is *K,* and the number of preambles associated with the second TRP is inferred from the number of preambles associated with the first TRP, where *K* is an integer. The network can configure preamble information for only one of the two TRPs, and in this case, preamble information for the other TRP is obtained through derivation. *K* may be indicated by the preamble information included in the set of random access resources corresponding to the first TPR and the second TRP. That is, among preambles available for one RO related to the type-1 random access, *Q* preambles are available for one SSB to which the one RO is mapped, and among the *Q* preambles, *K* preambles are related to the first TRP.

In a possible embodiment, the at least one TRP includes a first TRP and a second TRP. Among the *Q* preambles, the first TRP is associated with *X* preambles, and the second TRP is associated with *Y* preambles, where *X* and/or *Y* are network configuration information or protocol pre-defined information, and *X* and *Y* are an integer. The number of preambles corresponding to the first TRP and/or the second TRP can be directly or indirectly obtained in a protocol pre-defined manner.

In a possible embodiment, the at least one TRP includes a first TRP and a second TRP. Among the *Q* preambles, a scaling factor for the first TRP is $\alpha$, and a scaling factor for the second TRP is (1-$\alpha$), where the scaling factor indicates the number of preambles associated with the first TRP and/or the number of preambles associated with the second TRP. That is to say, in this case, the number of preambles associated with the first TRP is *Q*$^*\alpha$, and the number of preambles associated with the second TRP is *Q*$^*$(1-$\alpha$). The network can configure a scaling factor(s) for the first TRP and/or the second TRP. If the network configures the scaling factor for only the first TRP, the number of preambles associated with the second TRP is obtained through derivation in this case. In particular, when a value of *Q*$^*\alpha$ is not an integer, rounding calculation needs to be performed on the value, where the rounding manner may be rounding up or rounding down or taking an integer part of the value, etc. Certainly, the network can also configure the scaling factor(s) for the first TRP and/or the second TRP.

As can be seen, in this embodiment, the random resource configuration for each TRP is realized by associating different TRPs with different preambles in the same RO. Therefore, a TA per TRP can be effectively supported, and the random access efficiency and quality of the terminal device can be improved.

In a possible embodiment, the at least one TRP includes a first TRP and a second TRP. Among the *P* preambles, first *P-L3* preambles are associated with the first TRP, and last *L3* preambles are associated with the second TRP. *L*3 is an integer.

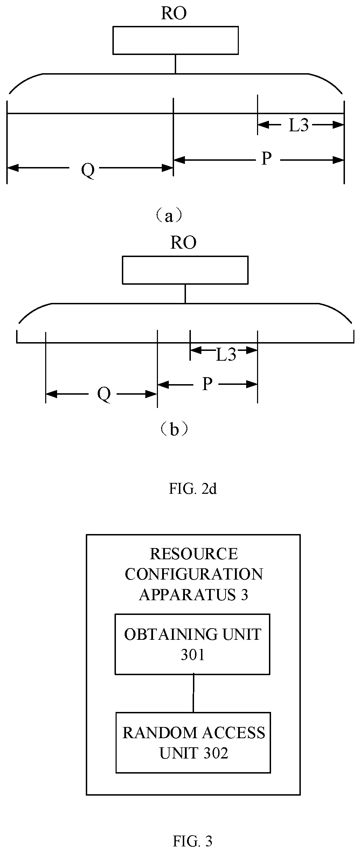

*P* and/or *L*3 and/or *P-L*3 may be indicated by the preamble information included in the set of random access resources corresponding to the first TPR and the second TRP. That is, among preambles available for one RO related to the type-2 random access, *P* preambles are available for one SSB to which the one RO is mapped, and among the *P* preambles, *L*3 preambles are related to the first TRP, and *P-L*3 preambles are related to the second TRP. As illustrated in FIG. 2d, the number of preambles associated with each TRP among *P* preambles for one SSB associated with one RO that are related to the type-2 random access when the mapping relationship between the SSB and the RO is the type-1 mapping relationship is illustrated in (a) in FIG. 2d. In this case, among the *P* preambles, the first *P-L3* preambles are associated with the first TRP, and the last *L3* preambles are associated with the second TRP.

The number of preambles associated with each TRP among *P* preambles for any one of multiple SSBs associated with one RO that are related to the type-2 random access when the mapping relationship between the SSB and the RO is the type-2 mapping relationship is illustrated in (b) in FIG. 2d. *P* preambles associated with one SSB are only part of all preambles associated with that RO, in which the first *P-L*3 preambles are associated with the first TRP, and the last *L*3 preambles are associated with the second TRP.

In a possible embodiment, the at least one TRP includes a first TRP and a second TRP. Among the *P* preambles, the number of preambles associated with the first TRP is *K,* and the number of preambles associated with the second TRP is inferred from the number of preambles associated with the first TRP, where *K* is an integer. The network can configure preamble information for only one of the two TRPs, and in this case, preamble information for the other TRP is obtained through derivation. *K* may be indicated by the preamble information included in the set of random access resources corresponding to the first TPR and the second TRP. That is, among preambles available for one RO related to the type-2 random access, *P* preambles are available for one SSB to which the one RO is mapped, and among the *P* preambles, *K* preambles are related to the first TRP.

In a possible embodiment, the at least one TRP includes a first TRP and a second TRP. Among the P preambles, the first TRP is associated with *X* preambles, and the second TRP is associated with *Y* preambles, where *X* and/or *Y* are network configuration information or protocol pre-defined information, and *X* and *Y* are an integer. The number of preambles corresponding to the first TRP and/or the second TRP can be directly or indirectly obtained in a protocol pre-defined manner.

In a possible embodiment, the at least one TRP includes a first TRP and a second TRP. Among the P preambles, a scaling factor for the first TRP is $\alpha$, and a scaling factor for the second TRP is (1-$\alpha$), where the

scaling factor indicates the number of preambles associated with the first TRP and/or the number of preambles associated with the second TRP. That is to say, in this case, the number of preambles associated with the first TRP is $P*\alpha$, and the number of preambles associated with the second TRP is $P*(1-\alpha)$. The network can configure a scaling factor(s) for the first TRP and/or the second TRP. If the network configures the scaling factor for only the first TRP, the number of preambles associated with the second TRP is obtained through derivation in this case. In particular, when a value of $P*\alpha$ is not an integer, rounding calculation needs to be performed on the value, where the rounding manner may be rounding up or rounding down or taking an integer part of the value, etc. Certainly, the network can also configure the scaling factor(s) for the first TRP and/or the second TRP.

As can be seen, in this embodiment, the random resource configuration for each TRP is realized by associating different TRPs with different preambles in the same RO. Therefore, a TA per TRP can be effectively supported, and the random access efficiency and quality of the terminal device can be improved.

In a possible embodiment, the set of random access resources corresponding to the multiple TRPs includes information of an RO associated with the at least one of the multiple TRPs.

When the multiple TRPs share the same random access resources, different TRPs may be associated with different ROs.

As can be seen, in this embodiment, the random resource configuration for each TRP is realized by associating different TRPs with different ROs. Therefore, a TA per TRP can be effectively supported, and the random access efficiency and quality of the terminal device can be improved.

In a possible embodiment, the at least one TRP includes a first TRP and a second TRP, the first TRP is associated with $T$ ROs, the second TRP is associated with $M-T$ ROs, $M$ is the number of ROs to which one SSB is mapped, and $T$ is an integer.

$M$ and/or $M-T$ may be indicated by the preamble information included in the set of random access resources corresponding to the first TPR and the second TRP. That is, among preambles available for one RO, $M$ preambles are available for one SSB to which the one RO is mapped, and among the $M$ preambles, $T$ preambles are related to the first TRP, and $M-T$ preambles are related to the second TRP. In case where two TRPs exists, for a type-1 mapping relationship (i.e., the above case where $N<1$ in the mapping relationship between the SSB and the RO), since one SSB corresponds to multiple ROs, if the one SSB is mapped to $M$ ROs, then among the $M$ ROs, some are associated with the first TRP, and the others are associated with the second TRP.

In a possible embodiment, the at least one TRP includes a first TRP and a second TRP. The first TRP is associated with $T$ ROs, and the number of ROs associated with the second TRP is inferred from the number of ROs associated with the first TRP. The network can configure RO information for only one of the two TRPs, and in this case, RO information for the other TRP is obtained through derivation.

In a possible embodiment, the at least one TRP includes a first TRP and a second TRP. Among the $M$ preambles, the number of ROs associated with the first TRP is $F$, and the number of ROs associated with the second TRP is $J$, where $F$ and/or $J$ are network configuration information or protocol pre-defined information, and $F$ and $J$ are an integer. The number of ROs associated with the first TRP and/or the second TRP can be directly or indirectly obtained in a protocol pre-defined manner.

In a possible embodiment, the at least one TRP includes a first TRP and a second TRP. Among the $M$ preambles, a scaling factor for the first TRP is $\alpha$, and a scaling factor for the second TRP is $(1-\alpha)$, where the scaling factor indicates the number of ROs associated with the first TRP and/or the number of ROs associated with the second TRP. That is to say, in this case, the number of ROs associated with the first TRP is $M*\alpha$, and the number of preambles associated with the second TRP is $M*(1-\alpha)$. The network can configure a scaling factor(s) for the first TRP and/or the second TRP. If the network configures the scaling factor for only the first TRP, the number of preambles associated with the second TRP is obtained through derivation in this case. In particular, when a value of $M*\alpha$ is not an integer, rounding calculation needs to be performed on the value, where the rounding manner may be rounding up or rounding down or taking an integer part of the value, etc. Certainly, the network can also configure the scaling factor(s) for the first TRP and/or the second TRP.

In a possible embodiment, indexes of the $T$ ROs in the $M$ ROs are consecutive. Alternatively, indexes of the $T$ ROs in the $M$ ROs are not consecutive.

When the indexes of the $T$ ROs are consecutive, it may mean that the $M$ ROs are divided into two parts according to indexes, where one part is associated with the first TRP, and the other part is associated with the second TRP. When the indexes of the $T$ ROs are not consecutive, the $M$ ROs may be respectively associated with the first TRP and the second TRP in an alternating form. The alternating manner may be alternation based on one RO, i.e., indexes of all of the $M$ ROs are not consecutive, or may be alternation based on multiple ROs, i.e., indexes of part of the $M$ ROs are consecutive.

As can be seen, in this embodiment, the random resource configuration for each TRP is realized by associating different TRPs with different ROs. Therefore, a TA per TRP can be effectively supported, and the random access efficiency and quality of the terminal device can be improved.

A resource configuration apparatus is provided in embodiments of the disclosure. The resource configuration apparatus may be configured to execute the operations executed by the terminal device in the method described above. The resource configuration apparatus may include units corresponding to the respective operations.

In embodiments of the disclosure, division of functional modules of the resource configuration apparatus can be exemplarily implemented according to the above method. For example, each functional module may be divided to correspond to each function, or two or more functions may be integrated into one processing module. The integrated module may be implemented in the form of hardware, or may be implemented in the form of software functional module. The division of modules in embodiments of the disclosure is illustrative, and is only a division of logical functions, and other manners of division may be available in practice.

If each functional module is divided to correspond to each function, as illustrated in FIG. 3, FIG. 3 is a block diagram of functional units of a resource configuration apparatus provided in embodiments of the disclosure. The resource configuration apparatus 3 includes an obtaining unit 301 and a random access unit 302. The obtaining unit 301 is configured to obtain configuration information, where the configuration information indicates random access resources for at least one of multiple TRPs. The random access unit 302 is configured to perform random access according to the configuration information.

In a possible embodiment, each of the multiple TRPs corresponds to one set of random access resources.

In a possible embodiment, the multiple TRPs include a first TRP and a second TRP, and the configuration information includes first random access resources for the first TRP and/or second random access resources for the second TRP.

In a possible embodiment, the first random access resources are resources corresponding to a first PCI, the second random access resources are resources corresponding to a second PCI, the first PCI is a PCI of a serving cell, and the second PCI is a PCI of any one of one or more non-serving cells.

In a possible embodiment, when the second PCI is a PCI of a non-serving cell associated with an active TCI state for a PDSCH, the second random access resources are available.

In a possible embodiment, the multiple TRPs correspond to a set of random access resources.

In a possible embodiment, the set of random access resources corresponding to the multiple TRPs includes preamble information associated with the at least one of the multiple TRPs in one RO.

In a possible embodiment, the set of random access resources corresponding to the multiple TRPs includes a configuration of type-1 random access for a terminal device. The number of preambles associated with each SSB associated with each RO related to the type-1 random access is $X1$, and $X1$ is an integer.

In a possible embodiment, the at least one TRP includes a first TRP and a second TRP. Among the $X1$ preambles associated with each SSB, first $X1$-$L1$ preambles are associated with the first TRP, and last $L1$ preambles are associated with the second TRP. $L1$ is an integer.

In a possible embodiment, the set of random access resources corresponding to the multiple TRPs further includes a configuration of type-2 random access for the terminal device. Each of the type-1 random access and the type-2 random access corresponds to one set of PRACH configurations. Preamble information associated with the at least one TRP in one RO is associated with the type-1 random access and/or the type-2 random access.

In a possible embodiment, the set of random access resources corresponding to the multiple TRPs includes configurations of type-1 random access and type-2 random access for a terminal device. The type-1 random access and the type-2 random access share the same set of PRACH configurations. The number of preambles associated with each SSB associated with each RO related to the type-1 random access is $Q$, the number of preambles associated with each SSB associated with each RO related to the type-2 random access is $P$, and $Q$ and $P$ each are an integer.

In a possible embodiment, the at least one TRP includes a first TRP and a second TRP. Among the $Q$ preambles, first $Q$-$L2$ preambles are associated with the first TRP, and last $L2$ preambles are associated with the second TRP. $L2$ is an integer.

In a possible embodiment, the at least one TRP includes a first TRP and a second TRP. Among the $P$ preambles, first $P$-$L3$ preambles are associated with the first TRP, and last $L3$ preambles are associated with the second TRP. $L3$ is an integer.

In a possible embodiment, the set of random access resources corresponding to the multiple TRPs includes information of an RO associated with the at least one of the multiple TRPs.

In a possible embodiment, the at least one TRP includes a first TRP and a second TRP, the first TRP is associated with $T$ ROs, the second TRP is associated with $M$-$T$ ROs, $M$ is the number of ROs to which one SSB is mapped, and $T$ is an integer.

In a possible embodiment, indexes of the $T$ ROs in the $M$ ROs are consecutive. Alternatively, indexes of the $T$ ROs in the $M$ ROs are not consecutive.

All related content of each operation involved in the above method embodiments may be incorporated into functional illustration of a corresponding functional unit by reference, which will not be repeated herein. Certainly, the resource configuration apparatus provided in embodiments of the disclosure includes, but is not limited to, the above units. For example, the resource configuration apparatus may further include a storage unit. The storage unit may be configured to store program codes and data of the resource configuration apparatus.

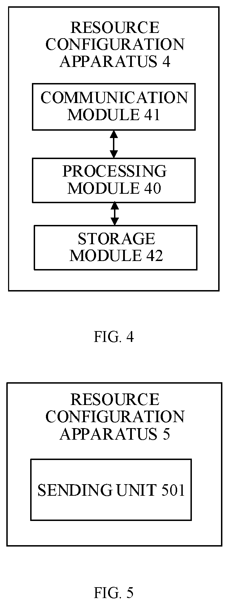

If an integrated unit is used, FIG. 4 is a schematic structural diagram of a resource configuration apparatus provided in embodiments of the disclosure. In FIG. 4, the resource configuration apparatus 4 includes a processing module 40 and a communication module 41. The processing module 40 is configured to control and manage actions of the resource configuration apparatus, for example, operations executed by the obtaining unit 301 and the random access unit 302, and/or other procedures for executing the technology described herein. The communication module 41 is configured to support communication between the resource configuration apparatus and other devices. As illustrated in FIG. 4, the resource configuration apparatus may further include a storage module 42. The storage module 42 is configured to store program codes and data of the resource configuration apparatus, for example, store content stored in the above storage unit.

The processing module 40 may be a processor or a controller, and may be, for example, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. Various illustrative logic blocks, modules, and circuits described in connection with the disclosure can be implemented or executed. The processor may also be a combination for implementing computing functions, for example, a combination that includes one or more microprocessors, a combination of a DSP and a microprocessor, and the like. The communication module 41 may be a transceiver, an RF circuit, a communication interface, or the like. The storage module 42 may be a memory.

All related content of each scenario involved in the above method embodiments may be incorporated into functional illustration of a corresponding functional module by reference, which will not be repeated herein. Both the resource configuration apparatus 3 and the resource configuration apparatus 4 can execute the operations executed by the terminal device in the resource configuration method illustrated in FIG. 2a described above.

A resource configuration apparatus is provided in embodiments of the disclosure. The resource configuration apparatus may be configured to execute the operations executed by the network device in the method described above. The resource configuration apparatus may include units corresponding to the respective operations.

In embodiments of the disclosure, division of functional modules of the resource configuration apparatus can be exemplarily implemented according to the above method. For example, each functional module may be divided to correspond to each function, or two or more functions may be integrated into one processing module. The integrated module may be implemented in the form of hardware, or may be implemented in the form of software functional module. The division of modules in embodiments of the disclosure is illustrative, and is only a division of logical functions, and other manners of division may be available in practice.

If each functional module is divided to correspond to each function, as illustrated in FIG. 5, FIG. 5 is a block diagram of functional units of a resource configuration apparatus provided in other embodiments of the disclosure. The resource configuration apparatus 5 includes a sending unit 501. The sending unit 501 is configured to send configuration information, where the configuration information indicates random access resources for at least one of multiple TRPs.

In a possible embodiment, each of the multiple TRPs corresponds to one set of random access resources.

In a possible embodiment, the multiple TRPs include a first TRP and a second TRP, and the configuration information includes first random access resources for the first TRP and second random access resources for the second TRP.

In a possible embodiment, the first random access resources are resources corresponding to a first PCI, the second random access resources are resources corresponding to a second PCI, the first PCI is a PCI of a serving cell, and the second PCI is a PCI of any one of multiple non-serving cells.

In a possible embodiment, when the second PCI is a PCI of a non-serving cell associated with an active TCI state for a PDSCH, the second random access resources are available.

In a possible embodiment, the multiple TRPs correspond to a set of random access resources.

In a possible embodiment, the set of random access resources corresponding to the multiple TRPs includes preamble information associated with the at least one of the multiple TRPs in one RO.

In a possible embodiment, the set of random access resources corresponding to the multiple TRPs includes a configuration of type-1 random access for a terminal device. The number of preambles associated with each SSB associated with each RO related to the type-1 random access is $X1$, and $X1$ is an integer.

In a possible embodiment, the at least one TRP includes a first TRP and a second TRP. Among the $X1$ preambles associated with each SSB, first $X1$-$L1$ preambles are associated with the first TRP, and last $L1$ preambles are associated with the second TRP. $L1$ is an integer.

In a possible embodiment, the set of random access resources corresponding to the multiple TRPs further includes a configuration of type-2 random access for the terminal device. Each of the type-1 random access and the type-2 random access corresponds to one set of PRACH configurations. Preamble information associated with the at least one TRP in one RO is associated with the type-1 random access and/or the type-2 random access.

In a possible embodiment, the set of random access resources corresponding to the multiple TRPs includes configurations of type-1 random access and type-2 random access for a terminal device. The type-1 random access and the type-2 random access share the same set of PRACH configurations. The number of preambles associated with each SSB associated with each RO related to the type-1 random access is $Q$, the number of preambles associated with each SSB associated with each RO related to the type-2 random access is $P$, and $Q$ and $P$ each are an integer.

In a possible embodiment, the at least one TRP includes a first TRP and a second TRP. Among the $Q$ preambles, first $Q-L2$ preambles are associated with the first TRP, and last $L2$ preambles are associated with the second TRP. $L2$ is an integer.

In a possible embodiment, the at least one TRP includes a first TRP and a second TRP. Among the P preambles, first $P-L3$ preambles are associated with the first TRP, and last $L3$ preambles are associated with the second TRP. $L3$ is an integer.

In a possible embodiment, the set of random access resources corresponding to the multiple TRPs includes information of an RO associated with the at least one of the multiple TRPs.

In a possible embodiment, the at least one TRP includes a first TRP and a second TRP, the first TRP is associated with $T$ ROs, the second TRP is associated with $M-T$ ROs, $M$ is the number of ROs to which one SSB is mapped, and $T$ is an integer.

In a possible embodiment, indexes of the $T$ ROs in the $M$ ROs are consecutive. Alternatively, indexes of the $T$ ROs in the $M$ ROs are not consecutive.

All related content of each operation involved in the above method embodiments may be incorporated into functional illustration of a corresponding functional unit by reference, which will not be repeated herein. Certainly, the resource configuration apparatus provided in embodiments of the disclosure includes, but is not limited to, the above units. For example, the resource configuration apparatus may further include a storage unit. The storage unit may be configured to store program codes and data of the resource configuration apparatus.

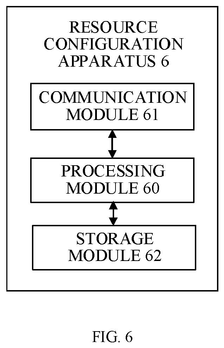

If an integrated unit is used, FIG. 6 is a schematic structural diagram of a resource configuration apparatus provided in embodiments of the disclosure. In FIG. 6, the resource configuration apparatus 6 includes a processing module 60 and a communication module 61. The processing module 60 is configured to control and manage actions of the resource configuration apparatus, for example, operations executed by the sending unit 501, and/or other procedures for executing the technology described herein. The communication module 61 is configured to support communication between the resource configuration apparatus and other devices. As illustrated in FIG. 6, the resource configuration apparatus may further include a storage module 62. The storage module 62 is configured to store program codes and data of the resource configuration apparatus, for example, store content stored in the above storage unit.

The processing module 60 may be a processor or a controller, and may be, for example, a CPU, a general-purpose processor, a DSP, an ASIC, an FPGA, or other programmable logic devices, transistor logic devices, hardware components, or any combination thereof. Various illustrative logic blocks, modules, and circuits described in connection with the disclosure can be implemented or executed. The processor may also be a combination for implementing computing functions, for example, a combination that includes one or more microprocessors, a combination of a DSP and a microprocessor, and the like. The communication module 61 may be a transceiver, an RF circuit, a communication interface, or the like. The storage module 62 may be a memory.

All related content of each scenario involved in the above method embodiments may be incorporated into functional illustration of a corresponding functional module by reference, which will not be repeated herein. Both the resource configuration apparatus 5 and the resource configuration apparatus 6 can execute the operations executed by the network device in the resource configuration method illustrated in FIG. 2a described above.

A chip is further provided in embodiments of the disclosure. The chip includes a processor. The processor is configured to invoke and execute a computer program stored in a memory, to cause a device equipped with the chip to execute part or all of the operations of the terminal device described in the above method embodiments.

A chip module is further provided in embodiments of the disclosure. The chip module includes a transceiver component and a chip. The chip includes a processor. The processor is configured to invoke and execute a computer program stored in a memory, to cause a device equipped with the chip to execute part or all of the operations of the terminal device described in the above method embodiments.

A computer-readable storage medium is further provided in embodiments of the disclosure. The computer-readable storage medium is configured to store a computer program for electronic data interchange (EDI). The computer program causes a computer to execute part or all of the operations of the network-side device described in the above method embodiments.

A computer program product is further provided in embodiments of the disclosure. The computer program product includes a computer program. The computer program causes a computer to execute part or all of the operations of the terminal device described in the above method embodiments. The computer program product may be a software installation package.

The operations of the method or algorithm described in embodiments of the disclosure may be implemented by means of hardware, or may be implemented by means of software instructions executed by a processor. The software instructions may consist of corresponding software modules, and the software modules may be stored in a random access memory (RAM), a flash memory, a read only memory (ROM), an erasable programmable ROM (EPROM), an electrically EPROM (EEPROM), a register, a hard disk, a mobile hard disk, a compact disk-ROM (CD-ROM), or any other form of storage medium known in the art. An exemplary storage medium is coupled to the processor, such that the processor can read information from the storage medium and write information to the storage medium. The storage medium may also be a part of the processor. The processor and the storage medium may be located in an ASIC. In addition, the ASIC may be located in an access-network device, a target network device, or a core-network device. The processor and the storage medium may also exist in the access-network device, the target network device, or the core-network device as discrete components.

Those skilled in the art will appreciate that, in one or more of the above examples, all or part of the functions described in embodiments of the disclosure may be implemented by software, hardware, firmware, or any other combination thereof. When implemented by software, all or part of the functions may be implemented in the form of a computer program product. The computer program product includes one or more computer instructions. When the computer program instructions are loaded and executed on a computer, all or part of the procedures or functions described in embodiments of the disclosure are performed. The computer may be a general-purpose computer, a special-purpose computer, a computer network, or other programmable apparatuses. The computer instruction may be stored in a computer-readable storage medium, or transmitted from one computer-readable storage medium to another computer-readable storage medium. For example, the computer instruction may be transmitted from one website, computer, server, or data center to another website, computer, server, or data center in a wired manner (such as a coaxial cable, an optical fiber, a digital subscriber line (DSL), etc.) or in a wireless manner (such as infrared, wireless, microwave, etc.). The computer-readable storage medium may be any computer accessible usable-medium or a data storage device such as a server, a data center, or the like which integrates one or more usable media. The usable medium may be a magnetic medium (such as a soft disk, a hard disk, or a magnetic tape), an optical medium (such as a digital video disc (DVD)), or a semiconductor medium (such as a solid state disk (SSD)), etc.

The objectives, technical solutions, and advantages of embodiments of the disclosure are described in detail in the foregoing implementations. It may be understood that, the foregoing elaborations are merely implementations of the embodiments of the disclosure, and are not intended to limit the protection scope of the embodiments of the disclosure. Any modifications, equivalent replacements, improvements, and the like made based on the technical solutions of the embodiments of the disclosure shall all fall within the protection scope of the embodiments of the disclosure.

**Claims**

1. A resource configuration method, comprising:

   obtaining configuration information, wherein the configuration information indicates random access resources for at least one of a plurality of transmission and reception points (TRPs); and
   performing random access according to the configuration information.

2. The method of claim 1, wherein each of the plurality of TRPs corresponds to one set of random access resources.

3. The method of claim 2, wherein the plurality of TRPs comprise a first TRP and a second TRP, and the configuration information comprises first random access resources for the first TRP and/or second random access resources for the second TRP.

4. The method of claim 3, wherein the first random access resources are resources corresponding to a first physical cell identifier (PCI), the second random access resources are resources corresponding to a second PCI, the first PCI is a PCI of a serving cell, and the second PCI is a PCI of any one of one or more non-serving cells.

5. The method of claim 4, wherein in response to the second PCI being a PCI of a non-serving cell associated with an active transmission configuration indicator (TCI) state for a physical downlink shared channel (PDSCH), the second random access resources are available.

6. The method of claim 1, wherein the plurality of TRPs correspond to a set of random access resources.

7. The method of claim 6, wherein the set of random access resources corresponding to the plurality of TRPs comprises preamble information associated with the at least one of the plurality of TRPs in one random access channel occasion (RO).

8. The method of claim 6, wherein the set of random access resources corresponding to the plurality of TRPs comprises a configuration of type-1 random access for a terminal device, a number of preambles associated with each synchronization signal and physical broadcast channel (PBCH) block (SSB) associated with each RO related to the type-1 random access is $X1$, and $X1$ is an integer.

9. The method of claim 8, wherein the at least one of the plurality of TRPs comprises a first TRP and a second TRP, and among the $X1$ preambles associated with each SSB, first $X1-L1$ preambles are associated with the first TRP, and last $L1$ preambles are associated with the second TRP, $L1$ being an integer.

10. The method of claim 8 or 9, wherein the set of random access resources corresponding to the plurality of TRPs further comprises a configuration of type-2 random access for the terminal device, each of the type-1 random access and the type-2 random access corresponds to one set of physical random access channel (PRACH) configurations, and preamble information associated with the at least one of the plurality of TRPs in one RO is associated with the type-1 random access and/or the type-2 random access.

11. The method of claim 7, wherein the set of random access resources corresponding to the plurality of TRPs comprises configurations of type-1 random access and type-2 random access for a terminal device, the type-1 random access and the type-2 random access share a same set of PRACH configurations, a number of preambles associated with each SSB associated with each RO related to the type-1 random access is $Q$, a number of preambles associated with each SSB associated with each RO related to the type-2 random access is $P$, and $Q$ and P each are an integer.

12. The method of claim 11, wherein the at least one of the plurality of TRPs comprises a first TRP and a second TRP, and among the $Q$ preambles, first $Q-L2$ preambles are associated with the first TRP, and last $L2$ preambles are associated with the second TRP, $L2$ being an integer.

13. The method of claim 11 or 12, wherein the at least one of the plurality of TRPs comprises a first TRP and a second TRP, and among the P preambles, first $P-L3$ preambles are associated with the first TRP, and last $L3$ preambles are associated with the second TRP, $L3$ being an integer.

14. The method of claim 6, wherein the set of random access resources corresponding to the plurality of TRPs comprises information of an RO associated with the at least one of the plurality of TRPs.

15. The method of claim 14, wherein the at least one of the plurality of TRPs comprises a first TRP and a second TRP, the first TRP is associated with $T$ ROs, the second TRP is associated with $M-T$ ROs, $M$ is a number of ROs to which one SSB is mapped, and $T$ is an integer.

16. The method of claim 15, wherein

indexes of the $T$ ROs in the $M$ ROs are consecutive; or
indexes of the $T$ ROs in the $M$ ROs are not consecutive.

17. A resource configuration method, comprising: sending configuration information, wherein the configuration information indicates random access resources for at least one of a plurality of transmission and reception points (TRPs).

18. A resource configuration apparatus, comprising:

an obtaining unit configured to obtain configuration information, wherein the configuration information indicates random access resources for at least one of a plurality of transmission and reception points (TRPs); and
a random access unit configured to perform random access according to the configuration information.

19. A resource configuration apparatus, comprising: a sending unit configured to send configuration information, wherein the configuration information indicates random access resources for at least one of a plurality of transmission and reception points (TRPs).

20. A terminal device, comprising a processor, a memory, and one or more programs, wherein the one or more programs are stored in the memory and configured to be executed by the processor, the programs containing instructions for executing operations in the method of any one of claims 1 to 16.

21. A network device, comprising a processor, a memory, and one or more programs, wherein the one or more programs are stored in the memory and configured to be executed by the processor, the programs containing instructions for executing operations in the method of claim 17.

22. A computer-readable storage medium configured to store a computer program for electronic data interchange (EDI), wherein the computer program causes a computer to execute the method of any one of claims 1 to 16 or claim 17.

23. A chip configured to obtain configuration information, wherein the configuration information indicates random access resources for at least one of a plurality of transmission and reception points (TRPs); and perform random access according to the configuration information.

24. A chip module, comprising a transceiver assembly and a chip, wherein
the chip is configured to obtain configuration information, wherein the configuration information indicates random access resources for at least one of a plurality of transmission and reception points (TRPs); and perform random access according to the configuration information.

25. A chip configured to send configuration information, wherein the configuration information indicates random access resources for at least one of a plurality of transmission and reception points (TRPs).

26. A chip module, comprising a transceiver assembly and a chip, wherein
the chip is configured to send configuration information, wherein the configuration information indicates random access resources for at least one of a plurality of transmission and reception points (TRPs).

FIG. 1a

FIG. 1b

NETWORK DEVICE 120

PROCESSOR 310

COMMUNICATION INTERFACE 330

MEMORY 320

ONE OR MORE PROGRAMS 321

FIG. 1c

NETWORK DEVICE

TERMINAL DEVICE

AT 201, SEND, BY NETWORK DEVICE, CONFIGURATION INFORMATION TO TERMINAL DEVICE, WHERE CONFIGURATION INFORMATION INDICATES RANDOM ACCESS RESOURCES FOR AT LEAST ONE OF MULTIPLE TRPS

AT 202, PERFORM, BY TERMINAL DEVICE, RANDOM ACCESS ACCORDING TO CONFIGURATION INFORMATION

FIG. 2a

RO

X1

L1

（a）

RO

L1

X1

（b）

FIG. 2b

RO

L2

Q

P

（a）

RO

L2

Q

P

（b）

FIG. 2c

RO

Q

P

L3

(a)

RO

Q

P

L3

(b)

FIG. 2d

RESOURCE
CONFIGURATION
APPARATUS 3

OBTAINING UNIT
301

RANDOM ACCESS
UNIT 302

FIG. 3

RESOURCE
CONFIGURATION
APPARATUS 4

COMMUNICATION
MODULE 41

PROCESSING
MODULE 40

STORAGE
MODULE 42

FIG. 4

RESOURCE
CONFIGURATION
APPARATUS 5

SENDING UNIT 501

FIG. 5

RESOURCE
CONFIGURATION
APPARATUS 6

COMMUNICATION
MODULE 61

PROCESSING
MODULE 60

STORAGE
MODULE 62

FIG. 6

## INTERNATIONAL SEARCH REPORT

| International application No. |
| --- |
| **PCT/CN2023/121586** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, VEN, 3GPP: 随机接入, 资源, 配置, 指示, 发送接收点, 组, 传输接收点, 提前定时, 多, 物理小区标识, 前导码, 指定, RACH, PRACH, resource, configur+, indicat+, TRP, TA, PCI, preamble, group, set, multi+

**C. DOCUMENTS CONSIDERED TO BE RELEVANT**

| Category* | Citation of document, with indication, where appropriate, of the relevant passages | Relevant to claim No. |
| --- | --- | --- |
| X | CN 107734600 A (CHINA ACADEMY OF TELECOMMUNICATIONS TECHNOLOGY) 23 February 2018 (2018-02-23) description, paragraphs 7-39, 66, 80, and 220 | 1-26 |
| X | CN 107734632 A (CHINA ACADEMY OF TELECOMMUNICATIONS TECHNOLOGY) 23 February 2018 (2018-02-23) description, paragraphs [0004]-[0048] | 1-26 |
| X | CN 114830554 A (QUALCOMM INC.) 29 July 2022 (2022-07-29) description, paragraphs 83-95 | 1-26 |
| A | WO 2022088009 A1 (QUALCOMM INC.) 05 May 2022 (2022-05-05) entire document | 1-26 |
| A | LG ELECTRONICS. "RACH Procedure Considering Multi-TRP Operation" *3GPP TSG RAN WG1 Meeting #87 R1-1611795,* 18 November 2016 (2016-11-18), entire document | 1-26 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 November 2023** | **22 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121586**

| Patent document cited in search report | | | Publication date (day/month/year) | Patent family member(s) | | | Publication date (day/month/year) |
|---|---|---|---|---|---|---|---|
| CN | 107734600 | A | 23 February 2018 | WO | 2018028311 | A1 | 15 February 2018 |
| CN | 107734632 | A | 23 February 2018 | WO | 2018028436 | A1 | 15 February 2018 |
| CN | 114830554 | A | 29 July 2022 | EP | 4078835 | A1 | 26 October 2022 |
| | | | | WO | 2021126411 | A1 | 24 June 2021 |
| | | | | US | 2021195650 | A1 | 24 June 2021 |
| | | | | IN | 202247033351 | A | 17 June 2022 |
| WO | 2022088009 | A1 | 05 May 2022 | EP | 4238385 | A1 | 06 September 2023 |
| | | | | IN | 202327013683 | A | 31 March 2023 |

Form PCT/ISA/210 (patent family annex) (July 2022)